Europäisches Patentamt

(19) European Patent Office

Office européen des brevets

(11) Publication number: **0 255 544**
**A1**

(12) **EUROPEAN PATENT APPLICATION**

published in accordance with Art. 158(3) EPC

(21) Application number: 87900874.6

(22) Date of filing: 17.01.87

Data of the international application taken as a basis:

(86) International application number: PCT/JP 87/00026

(87) International publication number: WO 87/04545 (30.07.87 87/17)

(30) Priority: 17.01.86 JP 7627/86

(43) Date of publication of application: 10.02.88 Bulletin 88/6

(84) Designated Contracting States: DE FR GB

(51) Int. Cl.⁴: **G 06 F 15/72**

(71) Applicant: **FANUC LTD, 3580, Shibokusa Aza-Komanba Oshino-mura, Minamitsuru-gun Yamanashi 401-05 (JP)**

(72) Inventor: **YONEKURA, Mikio, 1103, Keio-Takao-Mansion 1231-36, Hatsuzawa-cho, Hachioji-shi Tokyo 193 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **FIGURE PICK-UP SYSTEM.**

㊗ In a figure-processing apparatus which projects and displays a three-dimensional figure except concealed portions on a screen based upon three-dimensional figure data, a window is set about a designated point on the screen, the three-dimensional figure data are clipped to correspond to the window in order to pick up a figure and data for discrimination contained in a view volume corresponding to the window, the data for discrimination thus picked up are stored in a pick buffer and a depth value of a straight line generated in response to the plane of the picked up figure is compared with a depth value that has been set to a depth buffer. When they are in agreement, the data for discriminating the figure to which the straight line belongs are read out of the pick buffer, and the figure data corresponding to the data for discriminating thus read are read out, in order to pick up a figure corresponding to the designated point. In the system of the invention, the figure concealed by another figure is not picked up, so that the figure can be continuously processed without the need of waiting for the completion of the processing of the preceding figure, and the processing time can be shortened.

# 0255544

## S P E C I F I C A T I O N

### TECHNICAL FIELD

The present invention relates to a system for extracting a desired one of graphic forms being displayed on a display screen and, more particularly, to a graphic form extracting system for extracting a graphic form which lies in a window set on the screen and in the foreground thereof, in a three-dimensional graphic processor.

### BACKGROUND ART

Fig. 2 shows a conventional graphic form extracting system for the three-dimensional graphic processor. Reference numeral 1 indicates a central processing unit (CPU), 2 a bus, 3 a pointing device, 4 a segment buffer, 5 a coordinate transformation unit, 6 a clipping unit, 7 a projection processing unit, 8 a shading unit, 9 a straight line generating unit, 10 a frame buffer, 11 a depth buffer, and 12 a comparator.

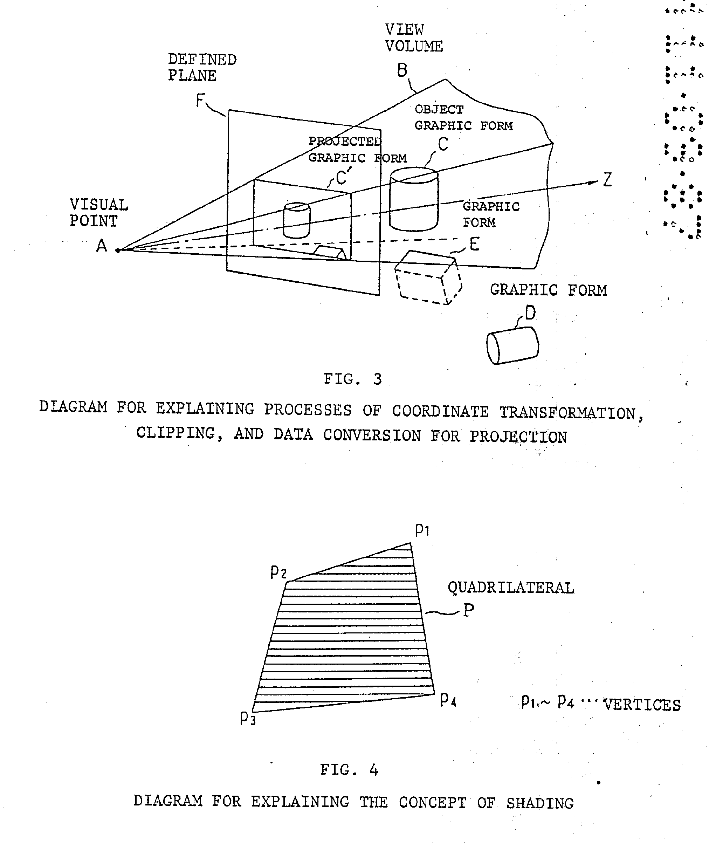

In Fig. 2 the CPU 1 reads out via the bus 2 three-dimensional image data stored in the segment buffer 4, and supplies it to the coordinate transformation unit 5. The coordinate transformation unit 5 sets a quadrangular pyramid (a view volume) B which has predetermined visual angle about a set visual point A and contains an object graphic form C as shown in Fig. 3. The coordinate transformation unit transforms the coordinate system, regarding the direction of

- 1 -

the height of the quardrangular pyramid as the Z-axis direction.

The clipping unit 6 decides whether graphic forms lie in the view volume, and performs a process (clipping) which extracts data of graphic forms lying inside the view volume, removing or deleting a graphic form D lying outside the boundary of the view volume and that portion of a graphic form E lying across the boundary which sticks out therefrom.

The projection processing unit 7 performs a process of transforming the graphic data (a process of data conversion for projection) so that the graphic forms in the view volume may be projected in such shapes as indicated by C' on a plane (a defined plane) F perpendicular to the Z axis, defined corresponding to the display screen of a display device (a CRT) not shown.

The shading unit 8 performs a process of filing the thus processed graphic forms with straight lines to display them as shaded planes (a shading process). Fig. 4 is explanatory of the concept of the shading process. For example, a quadrilateral graphic form P is given graphic data based on the coordinate values of its vertices $p_1$, $p_2$, $p_3$, and $p_4$. The shading process is performed by, for instance, covering the plane of the quadrilateral P with a number of segments which start at sides $p_1p_2$ and $p_2p_3$ and terminate at sides $p_3p_4$ and $p_4p_1$. The shading unit 8 instructs the straight line generating unit 9 to generate such segments.

The straight line generating unit 9, when instructed, generates straight lines as data which is composed of continuous rows of dots forming respective straight lines. At the same time a depth value set corresponding to the graphic form is read out of the depth buffer 11. The comparator 12 compares a depth value (a Z coordinate value) of the generated straight line with the depth value read out of the depth buffer 11. When coincidence is detected between them, the comparator closes a switch 13 and writes therethrough the generated straight line into the frame buffer 10.

In the depth buffer 11 there is preset, as a depth value, the Z coordinate value of that graphic form in the respective graphic data which is the nearest to visual point (i.e. a graphic form having the smallest Z coordinate value). In the case of three-dimensional graphic data in which a plurality of graphic forms overlap as viewed from the visual point, when the straight line created by the straight line generating unit 9 has a Z coordinate value larger than the value stored in the depth buffer 11, the straight line belongs to the plane of a graphic form hidden behind a graphic form lying closer to the visual point.

Accordingly, when it is decided, as a result of the comparison by the comparator 12, that the depth value of the generated straight line is larger than the depth value stored in the depth buffer 11, the switch 13 is opened, discarding data of the straight line is discarded. On the other hand, when coincidence is detected between the depth value of the generated straight line and the depth value stored in the depth buffer 11, the switch 13 is closed, through which the data of the straight line is written into the frame buffer 10. In this way, a process (concealed plane processing) is performed which prevents that the graphic form concealed from the visual point by the graphic form lying in the foreground is displayed overlapping with the latter on the display screen.

In the device depicted in Fig. 2 the graphic form extracting operation takes place in the following manner. At first, an operator specifies one point on the display screen to the CPU 1 by means of a cursor, joystick, light pen, or similar pointing device 3. The CPU 1 sets up a small window of a certain size about the specified point and sets in the clipping unit 6 a view volume corresponding to the window. Further, the CPU 1 turns OFF the switch 13, inhibiting a write into the frame buffer 10.

The CPU 1 reads out graphic data from the segment buffer 4 in succession for input into the coordinate transformation unit 5, thereafter performing the processes from the coordinate transformation to the straight line generation in the same manner as described above. When a graphic form contained in the window is found out as a result of the above processing, the CPU 1 recognizes the data of this graphic form, initiating its extraction.

Moreover, in this case, the switch 13 is closed, through w which the extracted graphic form is written into the frame buffer 10 and is displayed on the display device.

The conventional graphic form extracting system shown in Fig. 2 does not involve a process of deciding the magnitude of the distance from the visual point to each graphic form on the Z axis through use of the data in the depth buffer in the extraction of a graphic form contained in the view volume defined by the set window. This brings about the problem that when a plurality of graphic forms of different Z coordinate values are contained in the view v: volume, even a graphic form which ought to be hidden behind a graphic form in the foreground is also extracted.

Besides, the graphic form extracting process is performed by repeating the procedure which inputs graphic data from the segment buffer, decides whether the graphic form is contained in the window, and upon completion of a series of subsequent steps, the same process is initiated again for the next graphic data. This poses the problem : that processing of large quantities of graphic data takes much time.

## DISCLOSURE OF THE INVENTION

To solve the above-noted problems of the prior art, according to the graphic form extracting system of the present invention for a graphc processor which displays, by rejection, three-dimensional graphic forms except

0255544

concealed portions on a display screen on the basis of three-dimensional graphic data, a window is set about a specified point on the screen, the three-dimensional graphic data is clipped corresponding to the window, thereby extracting a graphic form contained in a view volume corresponding to the window and data for identification of the graphic form. The identification data thus extracted is stored in a pick buffer and a depth value of a straight line generated corresponding to the plane of the extracted graphic form is compared with a depth value set in a depth buffer. When coincidence is detected between the both depth values, the identification data for the graphic form to which the straight line belongs is read out from the pick buffer and the graphic data corresponding to the read-out identification data is read out, thus extracting a graphic form corresponding to the specified point.

In the system of the present invention, only when the depth value of each of straight lines generated for shading the plane of the graphic form contained in the view volume coincides with the set depth value, the graphic data is read out which corresponds to the identification data for the graphic form. This eliminates the possibility of extracting the graphic forms hidden behind the graphic form lying in the foreground are extracted. Furthermore, according to the system of the present invention, the identification data is appended to the graphic data, and when the graphic form is

- 6 -

decided not to be hidden behind by any other graphic forms, the stored identification data is used for reading out the corresponding graphic data. This permits continuous processing of the graphic form without the need of waiting for the completion of the processing of the preceding graphic form, and hence reduces the processing time.

BRIEF DESCRIPTION OF THE DRAWINGS

Fig. 1 is a diagram showing an example of the arrangement of the graphic form extracting system of the present invention;

Fig. 2 is a diagram showing the arrangement of a conventional graphic form extracting system;

Fig. 3 is a diagram for explaining a coordinate transformation process, a clipping process, and a process for data conversion for projection; and

Fig. 4 is a diagram for explaining the concept of shading.

BEST MODE FOR CARRYING OUT THE INVENTION

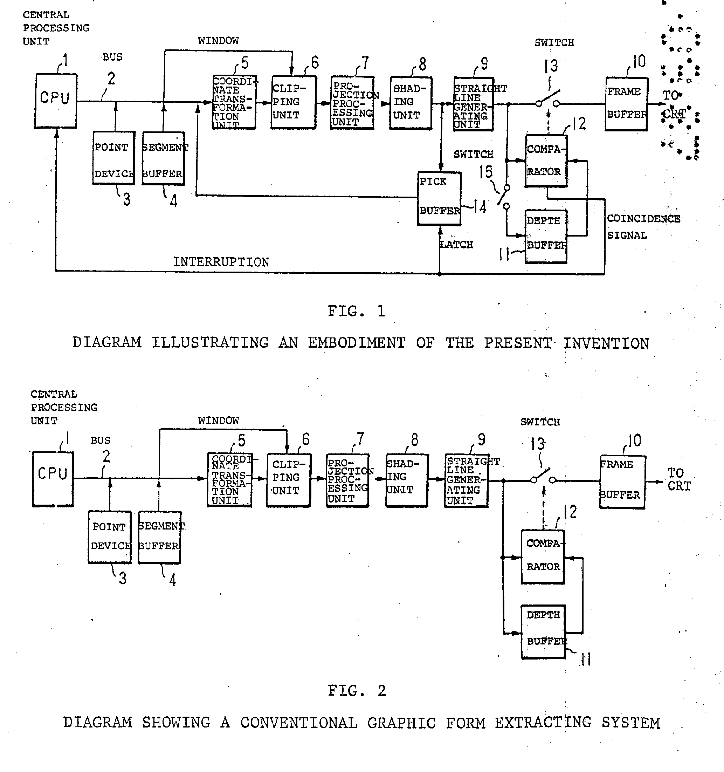

Fig. 1 is a diagram illustrating the arrangement of an embodiment of the present invention. In Fig. 1 the parts corresponding to those in Fig. 2 are identified by the same reference numerals. Reference numeral 14 indicates a pick buffer and 15 a switch.

The embodiment of Fig. 1 is common to the prior art system of Fig. 2 in the operation for providing an ordinary graphic form display. In the case where one of graphic forms displayed on the display screen is to be extracted for some manipulation in the graphic processor of Fig. 1, the operator causes the CPU 1 to correctly recognize which graphic form he wishes to manipulate, as described below.

At first, the operator specifies one point on the display screen to the CPU 1 by means of the pointing device 3. The CPU 1 sets up a window of a certain size about the specified point, setting up a view volume corresponding to the window set in the clipping unit 6. At the same time the CPU turns OFF the switches 13 and 15, inhibiting writes into the frame buffer 10 and the depth buffer 11.

Next, as is the case with ordinary display processing, graphic data in the segment buffer 4 is input into the coordinate transformation unit 5 for performing the coordinate transformation, followed by the clipping, projection, shading and straight line generation processing in the same manner as described previously with regard to Fig. 2. In this case, however, data for identification of the graphic data (ID No.) is appended to each graphic data. The data identification number passes through each processing section together with the graphic data, but its content will not change during the individual processing of the graphic data.

When the clipping processing takes place in the clipping unit 6, data of graphic forms lying outside the view volume is removed and the identification numbers

- 8 -

therefor are also removed. At the output of the hatching
unit 8 the graphic data and the identification number are
separated from each other, the former being applied to the
straight line generating unit 9 and the identification
number to the pick buffer 14.

The straight line generating unit 9 generates
straight lines corresponding to the plane of the graphic
data. The straight lines thus created are provided to the
comparator 12, wherein the depth value (the Z accordinate
value) of each straight line is compared with the depth
value stored in the depth buffer 11. The depth buffer 11
has set therein, as the depth value, the Z coordinate
value of a graphic form which is closer to the visual point
than any others. When it is decided, as a result of the
comparison by the comparator 12, that the depth value of
the generated straight line is greater than the depth value
stored in the depth buffer 11, the graphic form is regarded
as being hidden behind the graphic form lying in the
foreground and the corresponding identification number in the
pick buffer 14 is cancelled.

When the depth value of the generated straight line
coincides with the depth value stored in the depth buffer
11, the CPU 1 is interrupted and at the same time the
current value of the pick buffer 14 is latched.

The CPU 1 responds to the occurrence of the interruption to read out the identification number in the pick

- 9 -

buffer 14 and search through the segment buffer 4 for the graphic data corresponding to the identification number, for extracting the graphic form.

In this way, according to the present invention, only a graphic form lying closer to the visual point than any others is extracted at all times. When the graphic form is extracted, the graphic data is written via the switch 13 into the frame buffer 10, from which it is provided to the display (CRT) for displaying thereon the extracted graphic form, though not shown.

As described above, according to the graphic form extracting system of the present invention, the depth value of each of straight lines forming an extracted graphic form is compared with a depth value set in the depth buffer and only a graphic form closer to the visual point than the others is extracted. Accordingly, there is no fear of extracting a graphic form hidden behind other graphic forms lying in front of it.

Furthermore, identification data is appended to each graphic data for processing, the identification data corresponding to the graphic form for which the depth value coincides with that of the depth buffer is stored in the pick buffer, and the corresponding graphic form is extracted using the stored identification data. This permits continuous processing of graphic data without the necessity of waiting for the completion of the processing of the

0255544

preceding graphic data, and hence shortens the time for the extraction of each graphic form.

CLAIM

A graphic form extracting system for a graphic processor in which three-dimensional graphic data is clipped in accordance with a view volume set corresponding to a visual point, straight line data is generated corresponding to the plane of a graphic form contained in the view volume, and a graphic form is displayed, on a display screen, by straight lines extracted from the straight line data by reference to a depth value set in a depth buffer, characterized by:

means for setting a window about a specified point on the display screen;

means for appending identification data to each three-dimensional graphic data; and

a pick buffer for storing the identification data;

wherein the three-dimensional graphic data is clipped corresponding to the set window; the graphic form contained in the view volume corresponding to the window and its identification data are extracted and the identification data is stored in the pick buffer; a depth value of each of the straight lines generated corresponding to the plane of the extracted graphic form is compared with the depth value set in the depth buffer and when they coincide, the identification data of the graphic form to which the straight line belongs is read out of the pick buffer; and the graphic data corresponding to the read-out

- 12 -

0255544

identification data is read out for extracting a graphic form corresponding to the specified point.

FIG. 1

DIAGRAM ILLUSTRATING AN EMBODIMENT OF THE PRESENT INVENTION

FIG. 2

DIAGRAM SHOWING A CONVENTIONAL GRAPHIC FORM EXTRACTING SYSTEM

VIEW
VOLUME

DEFINED
PLANE

B

F

OBJECT
GRAPHIC FORM

PROJECTED
GRAPHIC FORM

C

VISUAL
POINT

C'

Z

GRAPHIC
FORM

A

E

GRAPHIC FORM

D

FIG. 3

DIAGRAM FOR EXPLAINING PROCESSES OF COORDINATE TRANSFORMATION,
CLIPPING, AND DATA CONVERSION FOR PROJECTION

P1

P2

QUADRILATERAL

P

P4

P3

P1 ~ P4 ... VERTICES

FIG. 4

DIAGRAM FOR EXPLAINING THE CONCEPT OF SHADING

# INTERNATIONAL SEARCH REPORT

0255544

International Application No. **PCT/JP87/00026**

**I. CLASSIFICATION OF SUBJECT MATTER** (if several classification symbols apply, indicate all) [3]

According to International Patent Classification (IPC) or to both National Classification and IPC

Int.Cl$^4$ G06F15/72

**II. FIELDS SEARCHED**

Minimum Documentation Searched [4]

| Classification System | Classification Symbols |
|---|---|
| IPC | G06F15/62, 15/72 |

Documentation Searched other than Minimum Documentation
to the Extent that such Documents are Included in the Fields Searched [5]

| | |
|---|---|
| Jitsuyo Shinan Koho | 1972 - 1986 |
| Kokai Jitsuyo Shinan Koho | 1972 - 1986 |

**III. DOCUMENTS CONSIDERED TO BE RELEVANT** [14]

| Category[*] | Citation of Document, [16] with indication, where appropriate, of the relevant passages [17] | Relevant to Claim No. [18] |
|---|---|---|
| X | JP, A, 59-129897 (Lexidata Corporation) 26 July 1984 (26. 07. 84) & US, A, 4,475,104 & EP, A, 116737 | 1 |
| X | Nikkei Electronics, No. 345 (June 18, 1984 (Published)) 18 June 1984 (18. 06. 84) (Tokyo), Maeda Shinichi and one other "Zukei no Henko ya Shiten no Ido o Host towa Dokuritsu ni Shori suru Graphic·Display Sochi", P.205-232 | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| March 3, 1987 (03. 03. 87) | March 16, 1987 (16. 03. 87) |

| International Searching Authority [1] | Signature of Authorized Officer [20] |
|---|---|
| Japanese Patent Office | |

Form PCT/ISA/210 (second sheet) (October 1981)